# EUROPÄISCHE PATENTSCHRIFT

(11) **EP 0 858 685 B1**
(45) Veröffentlichungstag und Bekanntmachung des Hinweises auf die Patenterteilung: **01.09.2004**
(21) Anmeldenummer: 97942910.7
(22) Anmeldetag: 04.09.1997
(51) Int. Cl.: H02G 3/04

(54) **DECKELKLAMMER FÜR EINEN KABELKANAL**
COVER CLAMP FOR A CABLE DUCT
SERRE-FILS A COUVERCLE POUR CANIVEAU DE C BLES

(30) Priorität: 05.09.1996 DE 19636007
(43) Veröffentlichungstag der Anmeldung: 19.08.1998
(73) Patentinhaber: HILTI Aktiengesellschaft, 9494 Schaan (LI)
(72) Erfinder: MIRANDA, Giovanni, D-78549 Spaichingen (DE)
(74) Vertreter: Wildi, Roland
(86) Internationale Anmeldenummer: PCT/EP1997/004806
(87) Internationale Veröffentlichungsnummer: WO 1998/010499

(56) Entgegenhaltungen:
- EP-A- 0 526 024
- DE-U- 7 800 098
- DE-U- 29 502 856
- FR-A- 2 448 240

## Beschreibung

Die Erfindung betrifft einen Kabelkanal mit einer leicht lösbaren Deckelklammer und Rasteinrichtungen an dessen Seitenwänden zum Festlegen der Deckelklammer, wobei die Deckelklammer (2) mindestens einen Flügel mit einem der Verbindung dienenden weichelastischen Schamier und ein Zwischenstück aufweist, sowie ein Verfahren zu deren Herstellung.

Kabelkanäle sind in vielfältiger Form und Ausführung bekannt. Bevorzugt wird auf einen Kabelkanal verwiesen, wie er in der EP-A-95 111 799.3 beschrieben ist, wobei dort ein Kabelkanalprofil in Form eines Endlosbandes mit in Längsrichtung verlaufenden, Wandabschnitte bildenden Segmente hergestellt wird, die über deformierbare Scharnierstege miteinander verbunden sind, so dass die Wandabschnitte etwa um 90° aufgeklappt werden können und so der Kabelkanal hergestellt wird. In dieser Lage werden dann die Wandabschnitte durch entsprechende Verriegelungsorgane gehalten.

Femer ist in der EP 0526024 B1 ein Kabelkanal offenbart, der einen, über ein weichelastisches Schamier mit der einer Seitenwand des Kabelkanals verbunden Flügel aufweist. Auf der dem Scharnier gegenüberliegenden Längsseite ist eine Rasteinrichtung derart angeordnet, dass der Flügel lösbar mit einer Seitenwand verbunden werden kann. Nachteilig an dieser bekannten Lösung ist, dass bei einer Über-Kopf-Montage durch die im Kabelkanal verlegten Kabel einer hoher Lastdruck auf den Kanaldeckel wirkt.

Für derartige Kabelkanäle gibt es sog. Deckelklammern, die im wesentlichen eine Montagehilfe darstellen. Bspw. werden diese Deckelklammern an einer Seitenwand des Kabelkanals festgelegt, so dass sie schräg vom Kabelkanal abstehen. In die verbleibende Öffnung zwischen Deckelklammer und Kabelkanal können Leitungen eingefädelt werden. Es ist gewährleistet, dass diese Leitungen nicht aus dem Kabelkanal herausfallen.

Bei einer Über-Kopf-Montage werden dagegen Deckelklammern beidseitig an den Seitenwänden des Kabelkanals festgelegt, so dass sie die Kabellasten abfangen. Dies gewährleistet, dass die Kabel nicht auf den eigentlichen Abdeckdeckeln des Kabelkanals liegen, welche bevorzugt leicht lösbar mit den Seitenwänden verbunden sein sollen. Hier verhindern die Deckelklammern einen zu hohen Lastdruck auf die Känaldekkel.

Ferner wirken derartige Deckelklammern seitenwandstabilisierend, da sie ein Widerlager für das spätere Einklipsen des Kanaldeckels bilden. Damit wird der Kanaldeckel unter leichter Vorspannung gehalten. Ferner dienen Deckelklammern als Klemmprofile für das Stabilisieren von zusätzlichen Trennwänden innerhalb des Kabelkanals.

Bekannt sind auch teilbare Deckelklammern, die bspw. nur eine bestimmte Kammer eines Kabelkanals freigeben, während die andere Kammer geschlossen bleibt.

Nachteile der bekannten Deckelklammern sind vor allem die relativ teuere Herstellung durch komplizierte Formwerkzeuge und die beschränkte Handhabungsmöglichkeit sowie der Umstand, dass für die Handhabung in der Regel zwei Hände notwendig sind.

Der vorliegenden Erfindung liegt die Aufgabe zugrunde, diese Nachteile zu beseitigen.

Zur Lösung dieser Aufgabe führt in erster Linie, dass der Flügel über das Schamier und über das Zwischenstück der Deckelklammer mit einem zweiten Flügel verbunden ist.

Entsprechend dem erfindungsgemässen Verfahren wird der zumindest eine Flügel an einem weiteren Teil der Deckelklammer über ein weichelastisches Scharnier im Extrusionsverfahren (Koextrusionsverfahren) angeformt, so dass ein Scharnier geschaffen wird, welches auch bei vielfachem Gebrauch oder beim Gebrauch bei relativ tiefen Temperaturen keinen Schaden leidet. Bevorzugt wird bspw. für das Scharnier ein Weich-PVC und für den Flügel bzw. den anderen Teil der Deckelklammer ein Hart-PVC als Werkstoff verwendet.

Die Herstellung als Endlosprofil hat vor allem den Vorteil, dass die Deckelklammern in einer gewünschten Breite von diesem Endlosprofil abgeschnitten werden können.

Die Anordnung eines Zwischenstückes bspw. zwischen zwei Flügeln bietet sich vor allem dann an, wenn der Kabelkanal durch eine Mittelwand in zwei Kammern unterteilt ist. In diesem Fall kann das Zwischenstück auf die Mittelwand aufgesetzt werden, während je ein Flügel eine Kammer überbrückt. Es besteht die Möglichkeit, dass ein Flügel sich in Schliesslage befindet, während der andere Flügel geöffnet ist. In die Kammer mit dem geöffneten Flügel können dann die entsprechenden Leitungen eingelegt werden, während die Leitungen in der anderen Kammer durch den geschlossenen Flügel gesichert sind.

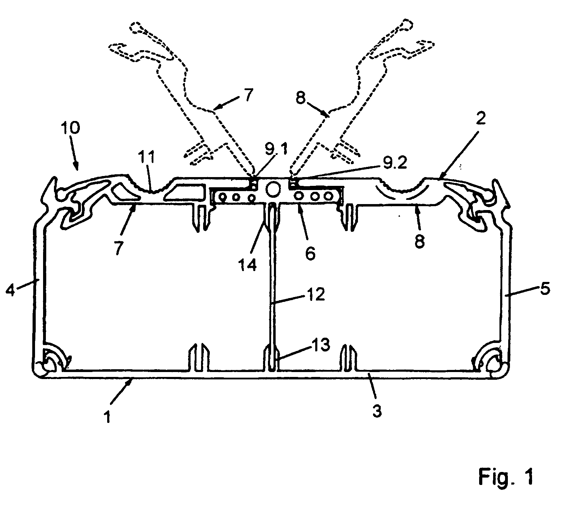

Die Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 einen Querschnitt durch einen Kabelkanal mit eingesetzter Deckelklammer in zwei Gebrauchslagen.

Gemäss Figur 1 ist mit einem Kabelkanal 1 eine Deckelklammer 2 verbunden. Im vorliegenden Ausführungsbeispiel ist der Kabelkanal 1 aus einem Endlosprofil hergestellt, wie dies in der EP-A 95 111 799.3 beschrieben ist. Deshalb wird auf eine nähere Kennzeichnung des Kabelkanals verzichtet, es könnte auch jeder andere Kabelkanal bei der vorliegenden Erfindung Anwendung finden. In jedem Fall weist der Kabelkanal 1 eine Rückwand 3 und zwei Seitenwände 4 und 5 auf.

Die Deckelklammer 2 besteht aus einem Zwischenstück 6 und zwei seitlich mit dem Zwischenstück 6 verbundenen Flügeln 7 und 8. Die Verbindung der Flügel 7 und 8 mit dem Zwischenstück 6 erfolgt jeweils über ein Scharnier 9.1 und 9.2, welches als weichelastisches Scharnier ausgebildet ist. Gemäss der vorliegenden Erfindung geschieht die Herstellung des Zwischenstückes 6 mit den Flügeln 7 und 8 und den Scharnieren 9.1 und 9.2 im Koextrusionsverfahren als Endlosprofil, wobei danach dann von diesem Endlosprofil die Deckelklammern 2 in gewünschter Breite abgeschnitten werden.

In Schliesslage geht jeder Flügel 7 bzw. 8 der Deckelklammer 2 eine Rastverbindung mit der jeweiligen Seitenwand 4 bzw. 5 des Kabelkanals 1 ein, wobei diese Rastverbindung über eine Rasteinrichtung 10 geschieht.

In Figur 1 sind die beiden Flügel 7 und 8 in Schliesslage, verbunden mit den Seitenwänden 4 und 5 des Kabelkanals, dargestellt, die Öffnungslage der Flügel 7 und 8 ist gestrichelt angedeutet. Beim Bewegen der Flügel 7 und 8 von der Öffnungs- in die Schliesslage, drehen diese Flügel 7 und 8 um das weichelastische Scharnier 9.1 bzw. 9.2, wobei zum Herstellen der Rastverbindung mit einem Finger einer menschlichen Hand in eine Griffmulde 11 gedrückt wird. Diese Griffmulde 11 kann noch zusätzlich mit einer Riffelung belegt sein.

Bevorzugt ist das Profilteil für die Flügel 7 und, nicht gezeigt, 8 als Hohlkammerprofil ausgebildet, wodurch die Steifigkeit bei Gewichtsreduzierung verbessert ist.

Eine Fixierung der Deckelklammer 2 gegenüber dem Kabelkanal 1 erfolgt durch Aufsetzen des Zwischenstückes 6 auf eine Mittelwand 12, welche in entsprechende Gabelstreifen 13 bzw. 14 an der Rückwand 3 des Kabelkanals 1 bzw. an dem Zwischenstück 6 eingesteckt ist.

## Patentansprüche

1. Kabelkanal (1) mit einer leicht lösbaren Deckelklammer (2) und Rasteinrichtungen (10) an dessen Seitenwänden (4, 5) zum Festlegen der Deckelklammer (2), wobei die Deckelklammer (2) mindestens einen Flügel (7) mit einem der Verbindung dienenden weichelastischen Scharnier (9.1, 9.2) und ein Zwischenstück aufweist, **dadurch gekennzeichnet, dass** der Flügel (7) über das Scharnier (9.1, 9.2) und über das Zwischenstück (6) der Deckelklammer (2) mit einem zweiten Flügel (8) verbunden ist.

2. Kabelkanal nach Anspruch 1, **dadurch gekennzeichnet, dass** am Zwischenstück (6) beidseits Flügel (7, 8) über das Scharnier (9.1, 9.2) verbunden sind.

3. Verfahren zum Herstellen eines Kabelkanals nach Anspruch 1 oder 2, mit einer Deckelklammer (2) und Rasteinrichtungen (10) an Seitenwänden (4, 5) zum Festlegen der Deckelklammer (2), wobei die Deckelklammer (2) mindestens einen Flügel (7) mit einem der Verbindung dienenden weichelastischen Scharnier (9.1, 9.2) aufweist, **dadurch gekennzeichnet, dass** als Endlosprofil zumindest ein Flügel (7 oder 8) der Deckelklammer (2) an einem weiteren Flügel (8 oder 7) und/oder an einem Zwischenstück (6) über das weichelastische Scharnier (9.1, 9.2) im Extrusionsverfahren (Koextrusionsverfahren) angeformt wird und von diesem Endlosprofil Decketklemmem (2) gewünschter Breite abgeschnitten werden.

## Claims

1. Cable duct (1) comprising an easily detachable cover clamp (2) and detent devices (10) at its side walls (4, 5) for fixing the cover clamp (2), and the cover clamp (2) comprises at least one wing (7) with a soft elastic hinge (9.1, 9.2) which serves the connection and an intermediate piece, **characterised in that** the wing (7) is connected via the hinge (9.1, 9.2) and intermediate piece (6) of the cover clamp (2) to a second wing (8).

2. Cable duct according to Claim 1, **characterised in that** at the intermediate piece (6) wings (7, 8) on both sides are connected via the hinge (9.1, 9.2).

3. Method of manufacturing a cable duct according to Claim 1 or 2, comprising a cover clamp (2) and detent devices (10) on side walls (4, 5) for fixing the cover clamp (2), and the cover clamp (2) comprises at least one wing (7) with a soft elastic hinge (9.1, 9.2) which serves the connection, **characterised in that** as continuous profile is moulded on in an extrusion process (co-extrusion process) at least one wing (7 or 8) of cover clamp (2) on an additional wing (8 or 7) and/or on an intermediate piece (6) via the soft elastic hinge (9.1, 9.2), and from this continuous profile are cut off cover clamps (2) of required width.

## Revendications

1. Caniveau de câbles (1) avec un serre-fils formant couvercle facilement détachable (2) et, sur ses parois latérales (4, 5), des dispositifs d'encliquetage (10) pour le blocage du serre-fils formant couvercle (2), le serre-fils formant couvercle (2) comportant au moins une aile (7) avec une charnière élastique souple (9.1, 9.2) servant à la liaison et une pièce intermédiaire, **caractérisée en ce que** l'aile (7) est reliée, par la charnière (9.1, 9.2) et par la pièce intermédiaire (6) du serre-fils formant couvercle (2), à une seconde aile (8).

2. Caniveau de câbles selon la revendication 1, **caractérisée en ce que** des ailes (7, 8) sont reliées à la pièce intermédiaire (6) de part et d'autre de celle-ci par l'intermédiaire de la charnière (9.1, 9.2).

3. Procédé pour la fabrication d'un caniveau de câbles selon la revendication 1 ou 2, avec un serre-fils formant couvercle facilement détachable (2) et, sur ses parois latérales (4, 5), des dispositifs d'encliquetage (10) pour le blocage du serre-fils formant couvercle (2), le serre-fils formant couvercle (2) comportant au moins une aile (7) avec une charnière élastique souple (9.1, 9.2) servant à la liaison, **caractérisé en ce qu'**au moins une aile (7 ou 8) du serre-fils formant couvercle (2) est surmoulée sous forme de profilé continu par un procédé d'extrusion (procédé de coextrusion) sur une autre aile (8 ou 7) et/ou sur une pièce intermédiaire (6) par l'intermédiaire de la charnière élastique souple (9.1, 9.2), et des serre-fils s formant couvercles (2) de la largeur souhaitée sont découpés à partir de ce profilé continu.
